# EUROPEAN PATENT APPLICATION

(11) **EP 4 394 913 A1**
(43) Date of publication of application: **03.07.2024**
(21) Application number: 23863445.5
(22) Date of filing: 04.09.2023
(51) Int. Cl.: H01M 4/04, F26B 3/30, F26B 21/00, F26B 25/16, F26B 13/14

(54) **ELECTRODE DRYING DEVICE AND ELECTRODE DRYING METHOD**

(30) Priority: 06.09.2022 KR 20220113035
(71) Applicant: LG Energy Solution, Ltd., Seoul 07335 (KR)
(72) Inventor: PARK, Min Gu, Daejeon 34122 (KR)
(74) Representative: Plasseraud IP
(86) International application number: PCT/KR2023/013191
(87) International publication number: WO 2024/053973

(57) **Abstract**

An electrode drying device of the present invention, including a shield unit provided for blocking a portion of the radiant heat emitted from the infrared heater, wherein the shield unit includes: a shield including first and second blocking parts configured to block one side and the other side of the infrared heater in the longitudinal direction; and first and second connecting parts connecting the first and second blocking parts and disposed to be spaced apart from each other; and a base plate disposed on a lower surface of the shield to support the shield, wherein the shield includes a bending part shaped to be curved toward an upper part where the infrared heater is located.

## Description

### [Technical Field]

This application claims the benefit of priority to Korean Patent Application No. 10-2022-0113035, filed on September 6, 2022.

The present invention relates to an electrode drying device that prevents sagging of a shield installed in the electrode drying device to prevent thermal wrinkling that occurs around the boundary of a coated part and a non-coated part during a drying process of an electrode sheet.

### [Background Technology of the Invention]

In general, a secondary battery is a battery that can be charged and discharged, as opposed to a primary battery that cannot be charged, and these secondary batteries are widely used in advanced electronic devices such as phones, laptops, camcorders, and the like.

The secondary battery is categorized into a can-type secondary battery and a pouch-type secondary battery, wherein the can-type secondary battery includes an electrode assembly, an electrolyte, a can accommodating the electrode assembly and the electrolyte, and a cap assembly mounted in an opening of the can. In addition, the electrode assembly has a structure in which electrodes and separators are alternately stacked. And the electrode includes a current collector and an electrode active material coated on the current collector.

Meanwhile, a manufacturing method of the electrode includes a transfer step of transferring a current collector, a coating step of applying an electrode slurry to a surface of the current collector to form an electrode composite layer, and a drying step of providing radiant heat by an infrared heater or blowing hot air to the electrode slurry coated on the current collector.

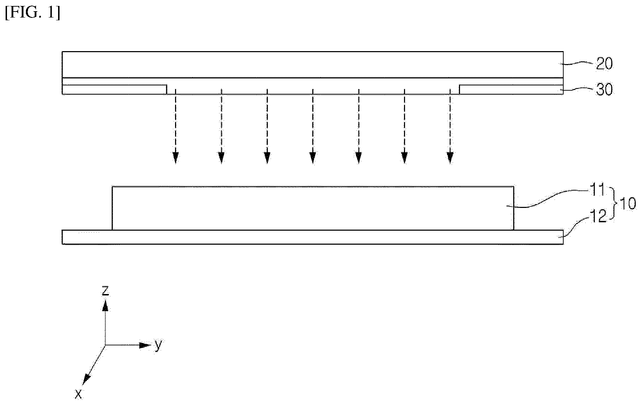

Here, the drying step converts the electrode slurry from a liquid phase to a solid phase, causing shrinkage of the electrode composite layer and a corresponding increase in drying stress. Referring to FIG. 1, in the electrode sheet 10 in which the electrode slurry 12 is applied to the current collector 12, the area around the boundary between a coated part to which the electrode slurry is applied and the non-coated part to which the electrode slurry is not applied is an area where a large number of thermal wrinkles occur. Since the drying speed of both edge areas in the width direction (y-axis direction) of the coated part is faster than the drying speed of the center area of the coated part, this deviation in drying speed causes thermal wrinkles, especially since the current collector expands as the temperature rises, the shrinkage of the electrode slurry and the expansion of the current collector work synergistically during drying, so the thermal wrinkles are aggravated.

In order to suppress this, an attempt is made to alleviate such thermal wrinkling phenomenon by disposing a shield unit 30 at the lower part of the infrared heater of the electrode drying device, thereby controlling the position and area where the radiant heat emitted from the infrared heater is exposed to the electrode coated part. Referring to FIG. 1, a shield unit 30 is disposed at the lower part of each of both sides of the infrared heater 20, and a portion of the radiant heat emitted from the infrared heater 20 is blocked by the shield unit 30.

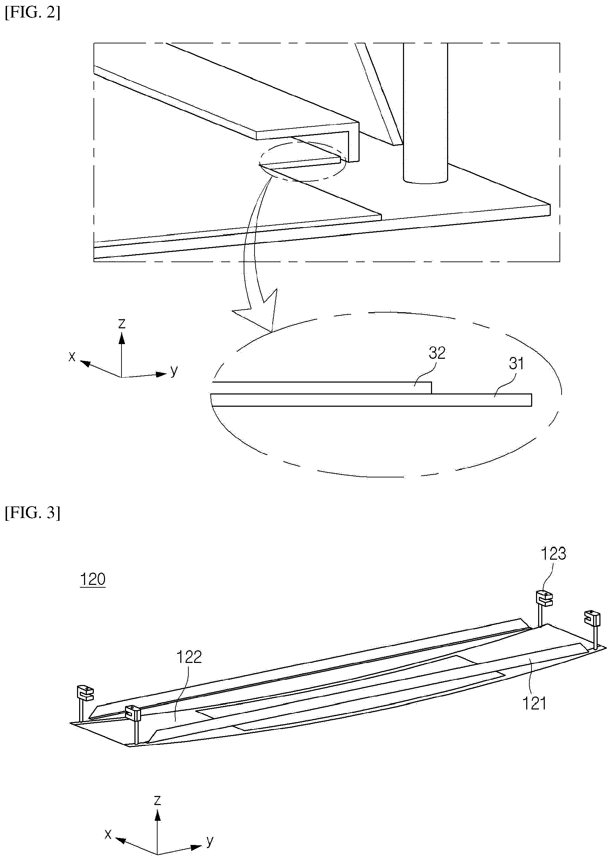

FIG. 2 is an enlarged view of a portion of a conventional shield unit. In the shield unit, an end of the shield 32 in the width direction y, which functions to block radiant heat, has a shape in which a planar shield is extended in a straight shape. Shields of this structure, when exposed to high temperature environments for extended periods of time, suffer from shield sagging due to the weight of the shield itself and thermal expansion. FIG. 3 illustrates this shield sagging phenomenon. If the shield sagging is severe, it may come into contact with the electrode slurry during drying, resulting in poor electrode quality.

Therefore, it is necessary to develop a technology for a shield unit that can prevent the shield sagging phenomenon of the shield unit.

### [Description of the Invention]

### [Technical Problem]

The present invention aims to provide an electrode drying device and an electrode drying method that prevents a sagging phenomenon of a shield unit installed in an electrode drying device in order to alleviate a thermal wrinkling phenomenon occurring around the boundary of a coated part and a non-coated part of an electrode sheet, ultimately improving the quality of the electrode.

### [Technical Solution]

An electrode drying device according to an exemplary embodiment of the present invention is an electrode drying device that dries an electrode sheet with an electrode slurry applied to a sheet-type current collector, including an infrared heater for applying radiant heat to the electrode sheet, and a shield unit provided for blocking a portion of the radiant heat emitted from the infrared heater, wherein the shield unit includes: a shield including first and second blocking parts configured to block one side and the other side of the infrared heater in the longitudinal direction; and first and second connecting parts disposed to be spaced apart from each other for connecting the first and second blocking parts; and a base plate disposed on a lower surface of the shield to support the shield, wherein the shield includes a bending part shaped to be curved toward an upper part where the infrared heater is located.

In an exemplary embodiment of the present invention, the shield may include a first bending part formed at the first connecting part and a second bending part formed at the second connecting part.

In an exemplary embodiment of the present invention, the bending part may be spaced apart from a plane of the base plate, with a maximum spacing distance of 0.1 mm to 5 mm.

In an exemplary embodiment of the present invention, the bending part may have a width of 5 mm to 30 mm at a position spaced 1 mm to 20 mm inwardly from an end of the shield.

In an exemplary embodiment of the present invention, a cross-section of the spacing space between the bending part and the base plate may have a semicircular shape.

In an exemplary embodiment of the present invention, a cross-section of the spacing space between the bending part and the base plate may have a triangular shape.

In an exemplary embodiment of the present invention, a cross-section of the spacing space between the bending part and the base plate may have a quadrilateral shape.

In an exemplary embodiment of the present invention, the base plate is in the shape of a square frame with a rectangular first through-hole in the center, wherein the ends of the two corner part of the base plate may each be bent upwardly.

In an exemplary embodiment of the present invention, the shield may be in the shape of a square frame with a rectangular second through-hole in the center.

In an exemplary embodiment of the present invention, the shield unit may further include a fixing clamp configured to attach and detach the shield unit to the infrared heater or its surroundings.

In an exemplary embodiment of the present invention, the shield may be configured of a material of stainless steel having a thickness of 0.5 mm to 10 mm.

In an exemplary embodiment of the present invention, the shield may be configured to be movably coupled to slide on the base plate.

The electrode drying device according to an exemplary embodiment of the present invention may further include a transfer part for transferring an electrode sheet to be dried in one direction while supported, wherein the shield unit may be disposed between the infrared heater and the transfer part.

The electrode drying device according to an exemplary embodiment of the present invention may further include a hot air drying means for blowing hot air onto the electrode sheet.

An electrode drying method according to the present invention dries an electrode sheet using the electrode drying device.

### [Advantageous Effects]

A shield unit according to the present invention has an effect of preventing a shield sagging phenomenon due to improved thermal fluidity by including a bending part in a part of the shield, and the drying device according to the present invention can reduce electrode failure due to shield sagging.

### [Brief Description of the Drawings]

FIG. 1 is a conceptual diagram that illustrates the need for a shield unit.
FIG. 2 is an enlarged view of a portion of a conventional shield unit.
FIG. 3 is a diagram illustrating the problems of a conventional shield unit.
FIG. 4 is a diagram illustrating a portion of a side of an electrode drying device according to an exemplary embodiment of the present invention.
FIG. 5 is a side view of an electrode drying device according to an exemplary embodiment of the present invention.
FIG. 6 is a front view of an electrode drying device according to an exemplary embodiment of the present invention.
FIG. 7 is an exploded perspective view of a shield unit according to an exemplary embodiment of the present invention.
FIG. 8 is a coupling diagram of a shield unit according to an exemplary embodiment of the present invention.
FIG. 9 is a top view of a shield according to an exemplary embodiment of the present invention.
FIG. 10 is a top view of a base plate according to an exemplary embodiment of the present invention.
FIG. 11 is an enlarged view of a portion of a base plate according to an exemplary embodiment of the present invention.
FIG. 12 is an enlarged view of a portion of a shield unit according to an exemplary embodiment of the present invention.
FIG. 13 is a diagram of a bending part according to an exemplary embodiment of the present invention.
FIG. 14 is a diagram of a bending part according to various exemplary embodiments of the present invention.

### [Best Mode for Carrying out the Invention]

The present invention may have various modifications and various examples, and specific examples are illustrated in the drawings and described in detail in the description. However, it should be understood that the present invention is not limited to specific embodiments, and includes all modifications, equivalents or alternatives within the spirit and technical scope of the present invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

In this specification, the x-axis is the direction in which the electrode sheet is transferred, the y-axis is the width direction of the electrode sheet or the longitudinal direction of the infrared heater, and the z-axis is the direction perpendicular to the plane of the electrode sheet, corresponding to the irradiation direction of the infrared light or the blowing direction of the hot air.

The electrode drying device of the present invention is described below.

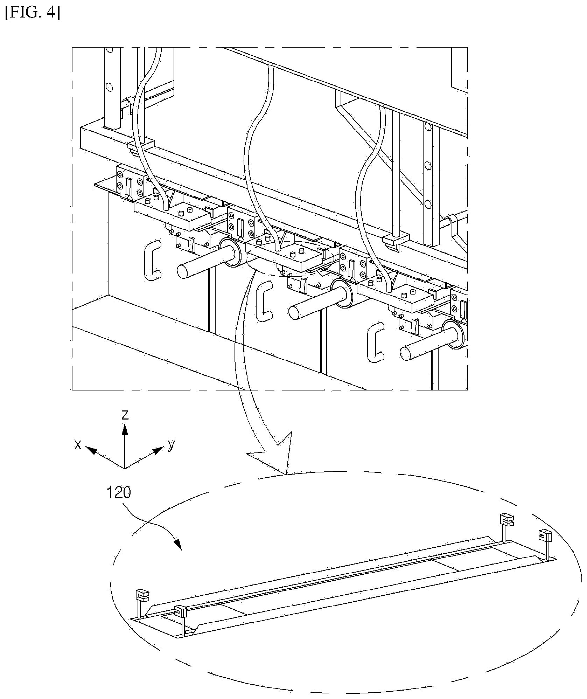

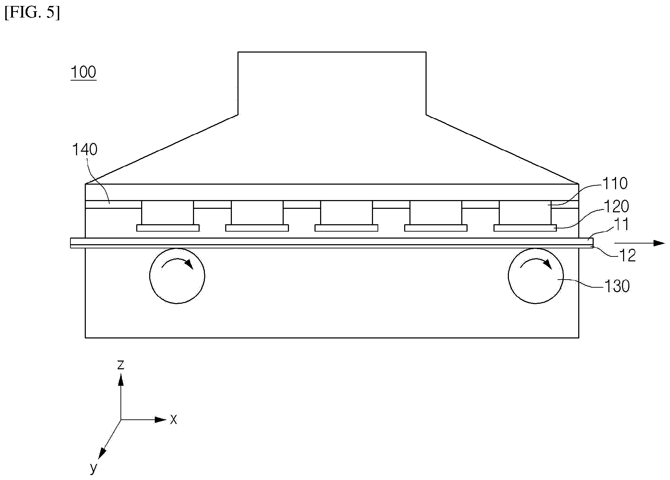

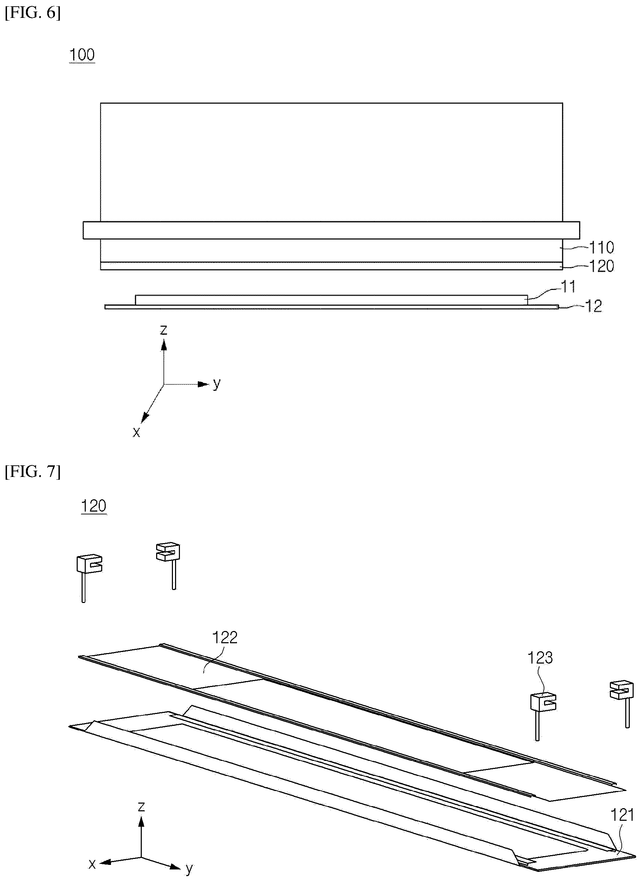

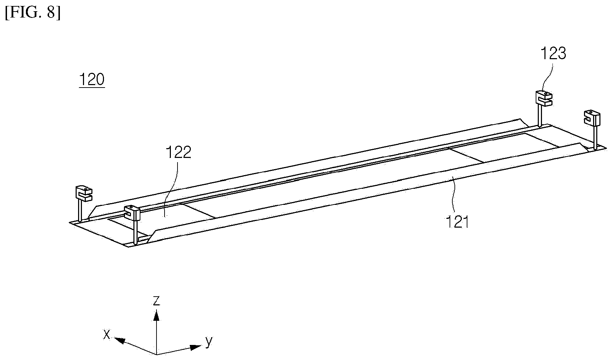

FIG. 4 is a diagram illustrating a portion of a side of an electrode drying device according to an exemplary embodiment of the present invention, FIG. 5 is a side view of an electrode drying device according to an exemplary embodiment of the present invention, FIG. 6 is a front view of an electrode drying device according to an exemplary embodiment of the present invention, FIG. 7 is an exploded perspective view of a shield unit according to an exemplary embodiment of the present invention, and FIG. 8 is a coupling diagram of a shield unit according to an exemplary embodiment of the present invention.

The electrode sheet 10 to be dried by the drying device 100 of the present invention may include a sheet-type current collector 12, as shown in FIGS. 1 and 5, and an electrode slurry 11 applied to at least one side of the current collector 12. In other words, the electrode sheet 10 of the present invention is manufactured by coating the electrode slurry 11 on one or both sides of the sheet-type current collector to be transferred, and the electrode slurry 11 of the electrode sheet 10 thus manufactured is dried through the electrode drying device 100 of the present invention.

An electrode drying device 100 according to an exemplary embodiment of the present invention, which is a drying device for alleviating drying deviations between a center part in the width direction and both edge parts of an electrode slurry and alleviating a thermal wrinkling phenomenon due to thermal expansion of the current collector, may include an infrared heater 110 for applying radiant heat to the electrode sheet 10, a shield unit 120 provided for blocking a portion of the radiant heat emitted from the infrared heater 110, and a transferring part 130 for transferring the electrode sheet to be dried in one direction while being supported.

The infrared heater 110 may be a drying means disposed on an upper part of the electrode sheet 10, relative to a direction perpendicular to a plane of the electrode sheet 10 (z-axis direction), and configured to emit radiant heat toward the electrode sheet 10 on the lower side. The infrared heater may include an infrared lamp (not shown) that irradiates infrared light, and a holder (not shown) that supports or holds the infrared lamp. The number and shape of the infrared heater is not particularly limited. When including a plurality of infrared heaters, the infrared heaters may be spaced apart from each other along the transfer direction (x-axis direction) of the electrode sheet.

The shield unit 120 is installed at a proximate location of the infrared heater 110, such as below the infrared heater 110, in order to control the location and area of the region irradiated by the radiant heat emitted from the infrared heater 110. The size and shape of the shield unit 120 is not particularly limited and may have a shape that corresponds to the size and shape of the infrared heater. For example, if the infrared heater is rod-shaped, the shield unit 120 may also be rod-shaped.

And, as shown in FIGS. 4 and 5, in a structure in which a plurality of infrared heaters 110 are arranged along the transfer direction of the electrode sheet 10, the shield unit 120 may also be arranged in pairs with the infrared heaters 110.

The transferring part 130 may include one or more transfer rollers, as means for transferring the electrode sheet 10 in the transfer direction (x-axis direction). The transfer rollers support the electrode sheet, move the electrode sheet in the transfer direction by rotational motion, and may further include a motor (not shown) that applies a rotational force to the transfer rollers.

In addition, the electrode drying device 100 of the present invention may further include a hot air drying means 140 for blowing hot air onto the electrode sheet. The hot air drying means is not particularly limited to any form as long as it can blow heated air toward the electrode sheet. An electrode drying device that includes a hot air drying means in addition to an infrared heater has the advantage of further increasing drying efficiency.

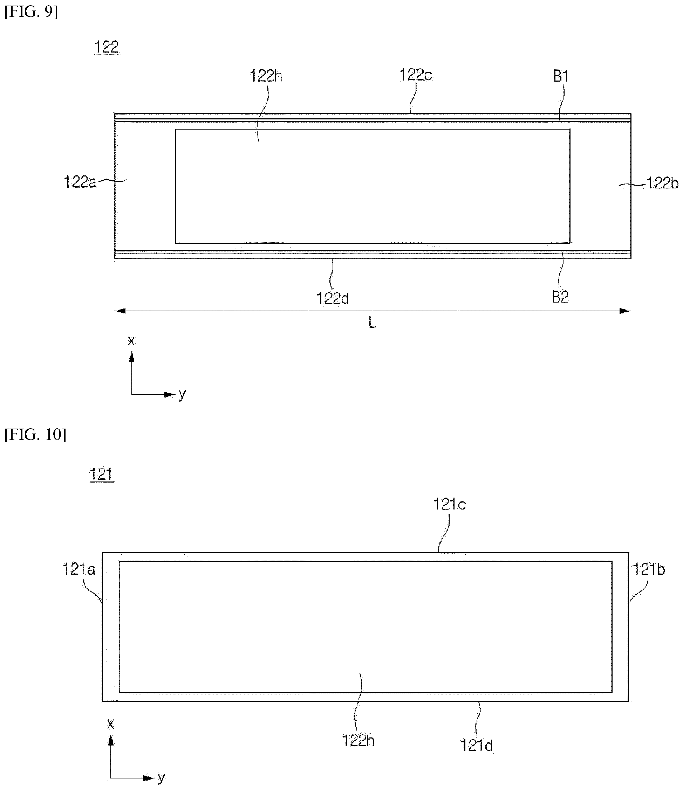

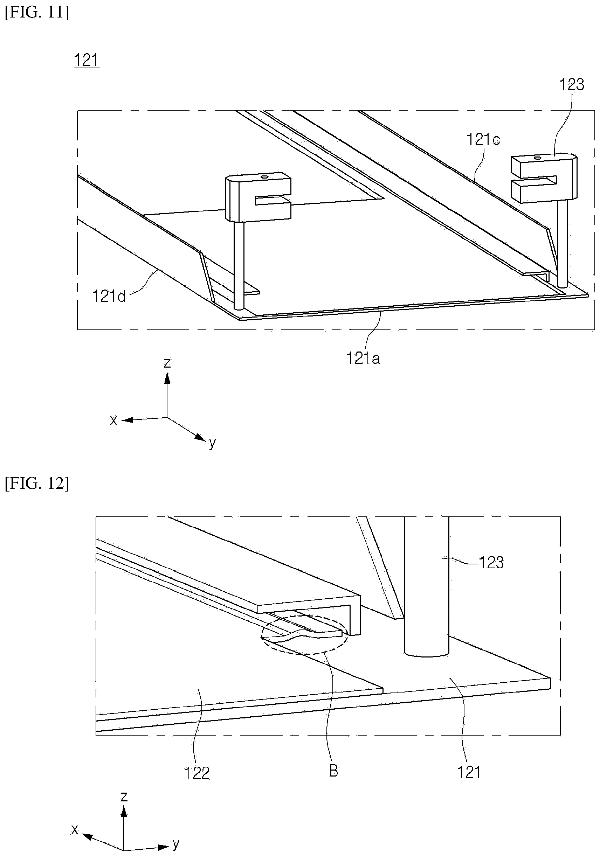

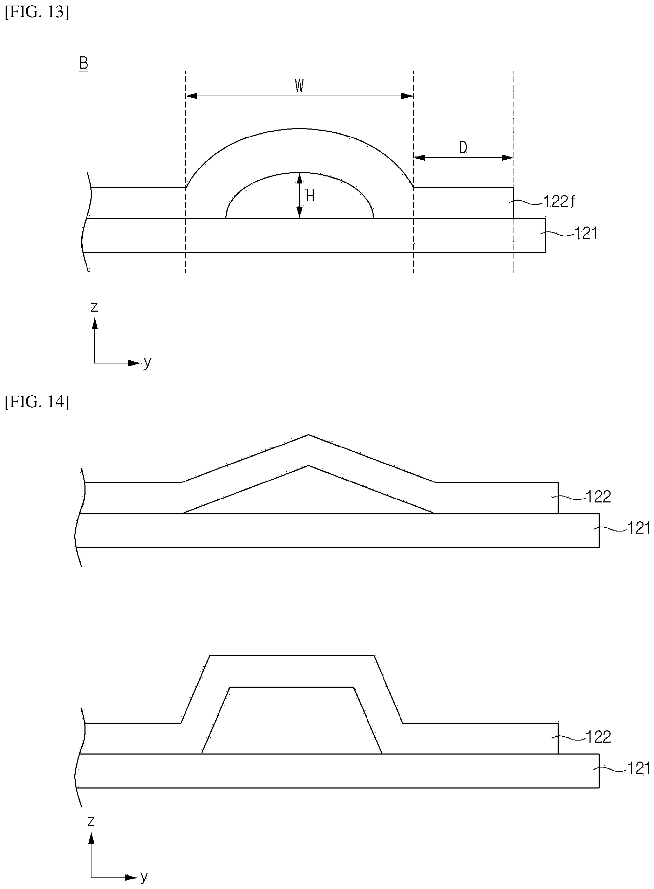

FIG. 7 is an exploded perspective view of a shield unit according to an exemplary embodiment of the present invention, FIG. 8 is a coupling diagram of a shield unit according to an exemplary embodiment of the present invention, FIG. 9 is a top view of a shield according to an exemplary embodiment of the present invention, and FIG. 10 is a top view of a base plate according to an exemplary embodiment of the present invention, FIG. 11 is an enlarged view of a portion of the base plate according to an exemplary embodiment of the present invention, FIG. 12 is an enlarged view of a portion of the shield unit according to an exemplary embodiment of the present invention, FIG. 13 is a diagram of a bending part according to an exemplary embodiment of the present invention, and FIG. 14 is a diagram of the bending part according to various exemplary embodiments of the present invention.

With reference to these drawings, a shield unit according to the present invention will be described in detail.

A shield unit 120 according to an exemplary embodiment of the present invention includes: a shield 122 including first and second blocking parts 122a, 122b configured to block one side and the other side in the longitudinal direction (y-axis direction) of the infrared heater 110; and a first and second connecting parts 122c, 122d connecting the first and second blocking parts 122a, 122b and spaced apart from each other; and a base plate 121 disposed on a lower surface of the shield 122 to support the shield, wherein the shield 122 includes a bending part B1, B2 bent toward an upper part where the infrared heater 110 is located.

Referring to FIG. 2, a conventional shield 32 has an end that extends in a straight line in a plane without bending, but the shield 122 of the present invention includes a bending part B1, B2, as shown in FIG. 12, and the shape of this bending part improves thermal fluidity in a high-temperature environment, and consequently alleviates the sagging phenomenon of the shield.

Referring to FIGS. 7 and 8, and FIGS. 10 and 11, the base plate 121 has a square frame shape with a rectangular first through-hole 121h in the center.
The base plate 121 functions to support the shield 122, and on the base plate 121, the shield 122 is seated.

In one particular example, the base plate 121 may include two corner parts bent upwardly for aligning the shield seated on the base plate. Referring to FIGS. 10 and 11, the rectangular base plate 121 may have four corner parts 121a-121d, of which the ends of the two corner parts 121c, 121d extending in parallel with the longitudinal direction (y-axis direction) of the infrared heater may be bent upwardly relative to a direction perpendicular to the ground (z-axis direction), respectively.

The shield 122, which is seated on the base plate 121, has first and second blocking parts 122a, 122b, and the first and second blocking parts 122a, 122b function to block a portion of the infrared heater 110 so that a portion of the radiant heat emitted from the infrared heater 110 is not transmitted to the electrode sheet 10.

Referring to FIG. 9, the shield 122 has a square frame shape with a rectangular second through-hole 122h in the center. Centering on the second through-hole 122h, a first blocking part 122a is located on the left, a second blocking part 122b is located on the right, a first connecting part 122c is located on the top, and a second connecting part 122d is located on the bottom.

The first and second blocking parts 122a, 122b may be located on the top so as to block areas where thermal wrinkles occur, such as portions of both edges of the width direction (y-axis direction) of the electrode sheet, or portions of the boundary between the coated part and non-coated part. By adjusting the area of the first and second blocking parts 122a, 122b, the increase or decrease of radiant heat to be blocked can be adjusted.

The first and second connecting parts 122c, 122d are disposed on the inner sides of the third corner part 121c and the fourth corner part 121d of the base plate 121, respectively, and have a predetermined width and extend along the longitudinal direction (y-axis direction) of the infrared heater. Within the spacing space between the first connecting part 122c and the second connecting part 122d, the second through-hole 122h is disposed.

Radiant heat emitted from the infrared heater 110 passes through the second through-hole 122h and is irradiated onto the electrode sheet 10.

The shield is preferably made of a stainless steel material that is not prone to thermal deformation in a high temperature environment of 100°C to 150°C, and the thickness may be 0.5mm to 10mm.

In one particular example, the shield 122 may be movably coupled to slide on the base plate 121.

The shield 122, according to one particular example, may include a first bending part B1 formed at the first connecting part 122c and a second bending part B2 formed at the second connecting part 122d.

The first and second bending parts B1, B2 extend along the longitudinal direction (y-axis direction) of the shield 122, respectively, and may be formed in a region from one end to the other end of the first connecting part 122c, and may be formed in a region from one end to the other end of the second connecting part 122d. However, the embodiment of the bending parts B1, B2 of the present invention is not limited to this, but may be embodied in various forms. For example, the bending parts B1, B2 may be formed at the location shown in FIG. 9, but their length may be 60% to 100% of the length L in the extending direction (y-axis length) of the first and second connecting parts 122c, 122d.

In addition, the formation locations of the bending parts B1, B2 may also be around the ends of the first and second blocking parts 122a, 122b, in addition to the locations shown in FIG. 9.

Referring to FIGS. 12 and 13, the bending parts B1, B2 of the present invention are spaced apart from the plane of the base plate 121 by a predetermined height in a plane-perpendicular direction (z-axis direction). In this case, the highest height H of the bending part, which is the maximum separation distance, may be 0.1 mm to 5 mm.

In addition, referring to FIG. 13, the bending parts B1, B2 may be configured to have a width W of 5 mm to 30 mm at a position spaced 1 mm to 20 mm inwardly from the end 122f of the shield 122. Here, the separation distance of 1 mm to 20 mm corresponds to D in FIG. 13.

Referring to FIG. 13, in the bending part according to an exemplary embodiment of the present invention, a cross-section of the spacing space between the bending part B and the base plate 121 may have a semicircular shape.

The curved shape of the bending part is not limited to this, and as shown in FIG. 14, the cross-section of the spacing space between the bending part B and the base plate 121 may be triangular, trapezoidal, or even quadrilateral. The quadrilateral may include both a rectangle and a square.

Referring to the above diagrams, the shield unit 120 according to an exemplary embodiment of the present invention may further include a fixing clamp 123 configured to attach and detach the shield unit 120 to the infrared heater 110 or its surroundings.

The location, number, and the like of the fixing clamp 123 are not particularly limited, as long as they are capable of fixing the shield unit, but the fixing clamp 123 according to an exemplary embodiment of the present invention may be provided one each around the four vertices of the base plate 121 supporting the shield 122, so as to stably fix the rectangular-shaped shield unit 120 to the infrared heater 110 or its surroundings.

A drying method of an electrode according to the present invention dries by using the electrode drying device.

The electrode drying device according to the present invention, wherein a shield comprising a shield unit installed to block a portion of the radiant heat emitted from an infrared heater includes a bending part in a curved form, has the effect of improving the shield sagging phenomenon by suppressing the temperature rise of the shield in a high temperature environment, and the drying device and drying method according to the present invention can reduce electrode defects due to shield sagging.

### Experimental Example 1: Measuring maximum sagging length of a shield

### Comparative Example

The shielding unit including the conventional shielding shown in FIG. 2 was installed in the electrode drying device and the electrode sheets were dried for 30 days.

The shield unit was then removed and the maximum sagging length was measured where the shield sagged below the height of the base plate, with the results shown in Table 1.

### Example

As shown in FIG. 12, a shield unit including a shield with a bending part was installed in an electrode drying device to dry the electrode sheet for 30 days.

The shield unit was then removed and the maximum sagging length was measured where the shield sagged below the height of the base plate, with the results shown in Table 1.

### Experimental Example 2: Measuring heat flow

For each of the shields of the Comparative Example and Example, DT_max was measured and the results are shown in Table 1. DT_max is the maximum temperature difference across the entire volume of the shield, with a smaller DT_max indicating favorable heat flow.

**[Table 1]**

| | Maximum sagging length | DT_max |
|---|---|---|
| Comparative Example | 4.11mm | 2.704 |
| Example | 1.64mm | 0.476 |

Referring to Table 1, it can be seen that the shield including the bending part according to the present invention has improved thermal fluidity, which has the effect of improving the shield sagging phenomenon due to the accumulation of drying time. Accordingly, the electrode drying device of the present invention is expected to have the effect of reducing the risk of poor electrode quality.

### [Reference numerals]

10: ELECTRODE SHEET
11: ELECTRODE SLURRY
12: CURRENT COLLECTOR
20: INFRARED HEATER
30: SHIELD UNIT
100: ELECTRODE DRYING DEVICE
110: INFRARED HEATER
120: SHIELD UNIT
121: BASE PLATE
121h: FIRST THROUGH-HOLE
122: SHIELD
122a: FIRST BLOCKING PART
122b: SECOND BLOCKING PART
122c: FIRST CONNECTING PART
122d: SECOND CONNECTING PART
B1: FIRST BENDING PART
B2: SECOND BENDING PART
123: FIXING CLAMP
130: TRANSFERRING PART
140: HOT AIR DRYING MEANS

## Claims

1. An electrode drying device that dries an electrode sheet with an electrode slurry applied to a sheet-type current collector, comprising
an infrared heater for applying radiant heat to the electrode sheet, and a shield unit provided for blocking a portion of the radiant heat emitted from the infrared heater, wherein
the shield unit comprises:
a shield comprising first and second blocking parts configured to block one side and the other side of the infrared heater in the longitudinal direction; and first and second connecting parts connecting the first and second blocking parts and disposed to be spaced apart from each other; and
a base plate disposed on a lower surface of the shield to support the shield, wherein
the shield comprises a bending part shaped to be curved toward an upper part where the infrared heater is located.

2. The electrode drying device of claim 1, wherein the shield comprises
a first bending part formed at the first connecting part and a second bending part formed at the second connecting part.

3. The electrode drying device of claim 1, wherein
the bending part is spaced apart from a plane of the base plate, with a maximum spacing distance of 0.1 mm to 5 mm.

4. The electrode drying device of claim 1, wherein
the bending part has a width of 5 mm to 30 mm at a position spaced 1 mm to 20 mm inwardly from an end of the shield.

5. The electrode drying device of claim 1, wherein
a cross-section of the spacing space between the bending part and the base plate has a semicircular shape.

6. The electrode drying device of claim 1, wherein
a cross-section of the spacing space between the bending part and the base plate has a triangular shape.

7. The electrode drying device of claim 1, wherein
a cross-section of the spacing space between the bending part and the base plate has a quadrilateral shape.

8. The electrode drying device of claim 1, wherein
the base plate is in the shape of a square frame with a rectangular first through-hole in the center, wherein
the ends of the two corner parts of the base plate are each bent upwardly.

9. The electrode drying device of claim 1, wherein
the shield is in the shape of a square frame with a rectangular second through-hole in the center.

10. The electrode drying device of claim 8, wherein the shield unit further comprises
a fixing clamp configured to attach and detach the shield unit to the infrared heater or its surroundings.

11. The electrode drying device of claim 1, wherein
the shield is configured of a material of stainless steel having a thickness of 0.5 mm to 10 mm.

12. The electrode drying device of claim 1, wherein
the shield is configured to be movably coupled to slide on the base plate.

13. The electrode drying device of claim 1, further comprising a transfer part for transferring an electrode sheet to be dried in one direction while supported, wherein
the shield unit is disposed between the infrared heater and the transfer part.

14. The electrode drying device of claim 1, further comprising a hot air drying means for blowing hot air onto the electrode sheet.

15. An electrode drying method using the electrode drying device according to claim 1.
